**Europäisches Patentamt**

**European Patent Office**

**Office européen des brevets**

(19)

(11) Veröffentlichungsnummer : **0 131 876**
**B1**

(12)

# EUROPÄISCHE PATENTSCHRIFT

(45) Veröffentlichungstag der Patentschrift :
30.11.88

(21) Anmeldenummer : **84107955.1**

(22) Anmeldetag : **06.07.84**

(51) Int. Cl.⁴ : **C 01 B 25/237**

(54) Verfahren und Vorrichtung zur Entfernung von organischen Verunreinigungen aus Nassverfahrensphosphorsäure.

(30) Priorität : **18.07.83 DE 3325862**

(43) Veröffentlichungstag der Anmeldung :
**23.01.85 Patentblatt 85/04**

(45) Bekanntmachung des Hinweises auf die Patenterteilung : **30.11.88 Patentblatt 88/48**

(84) Benannte Vertragsstaaten :
**BE DE FR GB IT NL SE**

(56) Entgegenhaltungen :
**DE-A- 2 447 390**
**FR-A- 2 404 599**

(73) Patentinhaber : **HOECHST AKTIENGESELLSCHAFT**
**Postfach 80 03 20**
**D-6230 Frankfurt am Main 80 (DE)**

(72) Erfinder : **Gradl, Reinhard, Dr.**
**Heimbacher Weg 27**
**D-5042 Erftstadt (DE)**
Erfinder : **Stephan, Hans-Werner**
**Ölbergstrasse 77**
**D-5000 Köln 41 (DE)**
Erfinder : **Heymer, Gero, Dr.**
**Fasanenaue 12**
**D-5042 Erftstadt (DE)**
Erfinder : **Schimmel, Günther, Dr.**
**Ehrenstrasse 16**
**D-5042 Erftstadt (DE)**

# 0 131 876

**Beschreibung**

Die vorliegende Erfindung betrifft ein Verfahren sowie eine Vorrichtung zur Entfernung von organischen Verbindungen aus Naßverfahrensphosphorsäure, insbesondere einer solchen mit einem $P_2O_5$-Gehalt von 25 bis 55 Gew.%, mit Hilfe eines Adsorptionsmittels.

Beim Aufschluß von Phosphaterzen mit Mineralsäuren entstehen stark verunreinigte Rohphosphorsäuren, die im Falle der Verwendung von Schwefelsäure als Hauptverunreinigungskomponente bis zu 5 % Sulfat enthalten. Neben den anorganischen Verunreinigungen sind in der Rohsäure auch organische Verbindungen enthalten, die im Ausgangsmaterial (Rohphosphat) enthalten sind oder bei der Vorbehandlung des Ausgangsmaterials oder beim Rohphosphataufschluß zugesetzt wurden.

Diese Verunreinigungen müssen für die weitere Nachbehandlung der Rohsäure bzw. für die verschiedenen Verwendungszwecke der gereinigten Säure entfernt werden.

So hat die FR-A-2 404 599 ein Verfahren zur Reinigung von Phosphorsäure zum Gegenstand, gemäß dem Eisen, Aluminium und insbesondere Magnesium dadurch aus der Phosphorsäure entfernt werden, daß man die Säure unter Druck auf Temperaturen von 100 bis höchstens 200 °C erhitzt, um die Ausfällung dieser Metalle in Form ihrer Pyrophosphate zu bewirken, wobei diese Ausfällung durch Zugabe von Kristallkeimen dieser Metallpyrophosphate begünstigt wird.

Verunreinigungen organischer Natur lassen sich auf diesem Wege nicht aus der Säure entfernen.

Die Eliminierung organischer Stoffe aus Phosphorsäure mit Hilfe von Aktivkohle als Adsorptionsmittel ist bereits bekannt. So beschreibt die DE-B-2 447 390 ein Verfahren zur Reinigung von roher, freie Schwefelsäure enthaltender Naßverfahrensphosphorsäure bei erhöhter Temperatur durch Zugabe von einer, zur Fällung der Schwefelsäure als Calciumsulfat ausreichenden Menge einer dafür geeigneten Calciumverbindung und von Alkali-, Kieselsäure- und Sulfatverbindungen sowie von einem Adsorptionsmittel für Verunreinigungen organischer Art und Abtrennen der zugesetzten oder gebildeten Feststoffe. Bei diesem Verfahren wird als Adsorptionsmittel zur Entfernung der organischen Verunreinigungen ausschließlich Aktivkohle verwendet. Dabei ist es zur Reinigung solcher Rohsäuren, die höhere Gehalte an organischen Verbindungen ($C_{org}$) aufweisen, notwendig, hochwertige und damit teure Aktivkohlen in größeren Mengen zu verwenden.

Es gibt aber darüber hinaus andere Rohsäuren, deren $C_{org}$-Verunreinigungen nicht einmal mit Überschüssen hochwertiger Aktivkohlen oder anderer Adsorbentien auf das für eine Weiterverarbeitung notwendige Maß reduziert werden können. Der Grund dafür liegt nicht alleine in der absoluten Höhe des organischen Verunreinigungsspiegels, sondern vor allem in der besonderen Art zumindest eines Teils dieser Verbindungen. Gerade solche Säuren sind aber als Rohstoffe interessant, da sie in der Regel in großen Mengen zur Verfügung stehen und meistens billiger sind als andere.

Es hat deshalb nicht an Versuchen gefehlt, die organischen Verunreinigungen durch Zugabe von Zusatzstoffen, insbesondere Oxidationsmittel wie z. B. Alkalichlorat (DE-C-2 522 220) zu zerstören oder diese Verbindungen vor der eigentlichen Phosphorsäurereinigung mit Hilfe von mit Wasser nicht mischbaren organischen Lösungsmitteln wie z. B. Dieselöl (DE-A-2 065 381) zu extrahieren. In beiden Fällen ist jedoch nur eine unzureichende Entfernung der $C_{org}$-Verunreinigungen zu erzielen und darüber hinaus werden im 1. Fall andere störende Ionen (z. B. Chlorid) in die Säure eingebracht und im 2. Fall ist das Verfahren äußerst aufwendig und damit unwirtschaftlich.

Deshalb war es von allgemeinen Interesse, ein Verfahren sowie eine Vorrichtung zur Reinigung von Naßverfahrensphosphorsäure zu finden, durch das die $C_{org}$-Verbindungen in der Rohsäure ohne Zusatz solcher Chemikalien weitgehend zerstört bzw. so verändert werden, daß sie im Rahmen der üblichen Reinigungsoperationen entfernt werden können.

Überraschenderweise wurde gefunden, daß sich diese Aufgabe auf einfache Weise lösen läßt, wenn man die handelsübliche Rohphosphorsäure vor der Behandlung mit dem Adsorptionsmittel in einem geschlossenen Behälter auf Temperaturen von mindestens 250 °C, vorzugsweise mindestens 300 °C, bei einem Druck von 15-85 bar, vorzugsweise von 30-85 bar, erhitzt. Zweckmäßigerweise erhitzt man dabei die Säure in Abhängigkeit von der Natur der Verunreinigungen so lange, bis letztere zerstört oder umgewandelt sind und behandelt die Säure, nachdem sie auf Temperaturen von 60 bis 100 °C abgekühlt ist, in an sich bekannter Weise mit dem Adsorptionsmittel.

Die erfindungsgemäße Arbeitsweise gestattet es, handelsübliche Naßverfahrensphosphorsäure mit einem Gehalt an $P_2O_5$ von 25-55 Gew.%, vorzugsweise konzentrierte Säure mit einem Gehalt von 45-55 Gew.% $P_2O_5$, die hohe $C_{org}$-Gehalte aufweisen, einzusetzen. Die Rohphosphorsäure wird dazu in geschlossenen, druckfesten Apparaten erhitzt, auf der gewünschten Endtemperatur gehalten und danach wieder auf eine Temperatur abgekühlt, die für die nachgeschalteten Reinigungsoperationen zweckmäßig ist. Die Temperaturzuführung und das Abkühlen können vorzugsweise durch indirekte Wärmeübertragung erfolgen, wobei es aus apparativen und energetischen Gründen zweckmäßig ist, die in den Reaktor eintretende kalte Säure mit Hilfe einer Gegenstrom-Prozeßführung durch die ablaufende heiße Säure aufzuheizen.

Erst ab etwa 120 °C beginnt die Zersetzung der organischen Verunreinigungen. Der Grad der Zersetzung dieser Verbindungen nimmt mit steigender Temperatur deutlich zu, so daß die Reaktionstemperatur mindestens 250 °C, vorzugsweise mindestens 300 °C, betragen sollte. Die Obergrenze der Reaktionstemperatur wird begrenzt durch die Beständigkeit der verwendeten Apparatewerkstoffe hinsichtlich Druckbelastung und Korrosionsbeständigkeit.

Der beim Erhitzen der Rohsäure entstehende Druck entspricht dem Dampfdruck der Phosphorsäure und ist abhängig von der Temperatur, von der Konzentration der Säure und den in ihr enthaltenen Verunreinigungen. Nach Erreichen der gewünschten Endtemperatur wird die Säure zweckmäßigerweise eine bestimmte Zeit auf dieser Temperatur gehalten. Da die Verweilzeit in weitaus geringerem Maße als die Endtemperatur für die Zerstörung der organischen Verunreinigungen maßgebend ist, genügen Verweilzeiten von 0,1 bis 0,5 Stunden.

Das Abkühlen der Säure erfolgt ebenfalls indirekt und vorteilhafterweise durch die in den Reaktor fließende, noch unbehandelte Rohsäure. Die Wärmetauscherflächen sind für einen gegebenen Durchsatz so bemessen, daß die Säure auf eine Temperatur abgekühlt wird, die für die direkte Weiterverarbeitung erforderlich ist.

Zum Abtrennen der org. Verunreinigungen wird dann in bekannter Weise ein Adsorptionsmittel zugegeben. Am besten verwendet man Pulver- oder Kornaktivkohlen oder Ruß nach dem Einrührverfahren. Die Zugabe des Adsorptionsmittels kann auch in Kombination mit Maßnahmen zur Entsulfatisierung und/oder Entfluorierung und/oder zur Abtrennung von schwerlöslichen Sulfiden erfolgen. Insbesondere kann die Zugabe des Adsorptionsmittels im Rahmen eines Vorreinigungsverfahrens erfolgen, wie es z. B. in der DE-PS 2 447 390 beschrieben ist.

Die Wirkung der erfindungsgemäßen Maßnahmen war, selbst für einen Fachmann, nicht vorhersehbar, da durch das Erhitzen die Moleküle der organischen Verbindungen mehr oder weniger gecrackt werden, d. h. in kleinere Bruckstücke zerfallen und es bekannt ist, daß größere organische Moleküle an sich besser adsorbiert werden als kleinere.

Das vorliegende neue Verfahren ist durch eine Reihe von Vorteilen gekennzeichnet : Die Konzentration der Phosphorsäure wird durch diesen Prozeß nicht verändert. Es werden keine störenden Fremdionen in die Säure eingebracht. Es sind keine aufwendigen Verfahrensschritte wie Filtration oder Extraktion erforderlich. Das für die konventionellen Reinigungsoperationen sonst notwendige Aufheizen der Säure kann entfallen. Unter den erfindungsgemäßen Bedingungen (Temperatur + Druck) sind die notwendigen Verweilzeiten so kurz, daß die Druckbehälter auch bei großen Durchsätzen klein dimensioniert werden können.

Da die großtechnisch betriebenen Verfahren zur Herstellung und Reinigung von Phosphorsäure ausschließlich kontinuierlich betrieben werden, war es weiterhin Aufgabe der Erfindung, für das erfindungsgemäße Verfahren zur Abreicherung der organischen Bestandteile eine Vorrichtung bereitzustellen, in der rohe Naßverfahrensphosphorsäure kontinuierlich unter Druck auf Temperaturen von mindestens 250 °C, vorzugsweise mindestens 300 °C, erhitzt werden kann.

Diese Vorrichtung ist in der nachfolgenden Zeichnung schematisch dargestellt und besteht im wesentlichen aus einem geschlossenen zylindrischen Reaktor 5, der im Bereich seines einen Endes mit einer über eine Leitung 3 mit einem Förderorgan 1 für die rohe Naßverfahrensphosphorsäure verbundenen Zuführung 4, im Bereich des anderen Endes mit einer Heizung 9 sowie in seinem Inneren mit einem im Durchmesser geringeren Rohr 10 versehen ist. Dieses Rohr 10 ist so gestaltet, daß es in dem Bereich des Reaktors 5, in welchem die Heizung 9 angebracht ist, offen endet, und daß es mit seinem anderen Ende im Bereich der Phosphorsäurezuführung 4 aus dem Reaktor 5 herausragt, wo es mit einem Druckhalteventil 13 verschlossen ist und gleichzeitig als Abflußleitung für die Phosphorsäure dient. Zusätzlich können

a) zwischen der Zuführung 4 und dem Förderorgan 1 eine Druckhalteeinrichtung 2,

b) in die Zuführung 4 ein Druckanzeigegerät PI und

c) am Ende des Reaktors 5, an welchem sich die Heizung 9 befindet, ein Temperaturanzeigegerät TI eingebaut sein.

Das Behältermaterial sollte hinsichtlich Druckfestigkeit und Korrosionsbeständigkeit hohen Anforderungen genügen. Vorzugsweise ist der Reaktor 5 aus einem metallischen Werkstoff gefertigt, der auf der produktberührten Seite mit einer Auskleidung versehen ist. Als Auskleidungswerkstoff können Graphit, Silber, Siliciumkarbid oder insbesondere Polytetrafluorethylen verwendet werden.

Die Funktionsweise der erfindungsgemäßen Vorrichtung soll anhand der nachfolgenden Zeichnung deutlich gemacht werden :

Über ein Förderorgan 1, dem gegebenenfalls eine Druckhaltevorrichtung 2 nachgeschaltet ist, wird die rohe Säure über Leitung 3 am Produkteinlaß 4 in den druckfesten Reaktor 5, dessen Innenseite vorzugsweise mit einer säurefesten Auskleidung 6 versehen ist, gepumpt. Die Rohsäure strömt im äußeren Bereich 7 des Reaktors 5 zur Heizzone 8, wird dort mit Hilfe der auf dem Reaktor 5 aufgebrachten Heizung 9 aufgeheizt, tritt dann in das im Reaktor 5 zentrisch angebrachte sowie an dieser Stelle offene Rohr 10 ein, in dem sie dann im Gegenstrom 11 zur einfließenden Säure bei 12 aus dem Reaktor ausgeschleust wird und schließlich über das Druckhalteventil 13 aus dem Reaktor 5 abfließt. Auf diese Weise wird die einströmende kalte Säure bei 7 durch die abfließende heiße Säure im Bereich 11 aufgeheizt und letztere abgekühlt. Diese Anordnung bietet den Vorteil, daß das Rohr 10 auf der Länge, mit der es im Reaktor 5 steckt, minimale Wandstärke haben kann (keine Druckauslegung erforderlich) und damit den Wärmefluß begünstigt. Da Eintritt und Austritt der Säure sich an gleicher Stelle des Doppelrohres befinden und relativ kalt sind, kann an dieser Stelle gegebenenfalls auf Korrosionsschutz

# 0 131 876

des metallischen Werkstoffs verzichtet werden.

Die Heizung 9 kann in Form einer elektrischen Widerstandsheizung oder als Doppelmantel mit Wärmeträgermedium ausgestattet sein.

## Beispiel 1 (Vergleichsbeispiel)

Eine handelsübliche Rohphosphorsäure mit einem $P_2O_5$-Gehalt von ca. 53 %, die durch Umsetzung von etwa 50 % Zinphosphat (Israel) und ca. 50 % Khouribgaphosphat (Marokko) mit Schwefelsäure hergestellt wurde, enthält 0,17 % organisch gebundenen Kohlenstoff ($C_{org}$). Jeweils gleiche Teile dieser Säure wurden auf 80 °C erwärmt und mit den nachfolgenden Mengen Aktivkohle verrührt und nach 30 Minuten über ein Druckfilter filtriert. In den Filtraten wurde der Restgehalt an organischen Verunreinigungen bestimmt.

| Menge A-Kohle bez. auf $P_2O_5$ (%) | 0,2 | 0,5 | 1,0 | 2,0 | 3,0 |
|---|---|---|---|---|---|
| $C_{org}$ in Säure (ppm) | 804 | 567 | 490 | 337 | 257 |

## Beispiel 2

Die gleiche Säure wie in Beispiel 1 wurde zunächst in einem 250-ml-Laborautoklaven, der mit einer Silberauskleidung versehen war, auf 250 °C erhitzt, 20 Minuten auf dieser Temperatur gehalten, wobei der Druck 40 bar erreichte und dann langsam auf 80 °C abgekühlt. In gleicher Weise wie in Beispiel 1 wurden aliquote Teile der Säure mit wechselnden Mengen Aktivkohle behandelt und nach 30 Minuten abfiltriert. In den Filtraten wurde der Restgehalt an organischen Verunreinigungen bestimmt.

| Menge A-Kohle bez. auf $P_2O_5$ (%) | 0,2 | 0,5 | 1,0 | 2,0 |
|---|---|---|---|---|
| $C_{org}$ in Säure (ppm) | 217 | 172 | 126 | 55 |

## Beispiel 3

Die gleiche Säure wie in Beispiel 1 wurde in einem mit PTFE ausgekleideten Doppelrohrreaktor, wie er in nachfolgender Zeichnung schematisch dargestellt ist, auf 250 °C erhitzt. Die Durchströmungsgeschwindigkeit war dabei so bemessen, daß die Säure eine mittlere Verweilzeit von ca. 6 min hatte. Nach dem Abkühlen auf 80 °C wurden wie in Beispiel 1 aliquote Teile der Säure mit unterschiedlichen Mengen Aktivkohle behandelt und nach 30 min filtriert. In den Filtraten wurde der Restgehalt an organischen Verunreinigungen bestimmt.

| Menge A-Kohle bez. auf $P_2O_5$ (%) | 0,2 | 0,5 | 1,0 | 2,0 |
|---|---|---|---|---|
| $C_{org}$ in Säure (ppm) | 210 | 174 | 153 | 125 |

## Beispiel 4 (Vergleichsbeispiel)

Eine handelsübliche Rohrphosphorsäure auf Basis Floridaphosphat mit einem $P_2O_5$-Gehalt von 52 % enthält 1670 ppm $C_{org}$. Wie in Beispiel 1 wurde diese Säure bei 80 °C mit verschiedenen Mengen Aktivkohle behandelt. Nach Filtration wurden die jeweiligen Gehalte an $C_{org}$ bestimmt.

| Menge A-Kohle bez. auf $P_2O_5$ (%) | 0,5 | 1,0 | 2,0 |
|---|---|---|---|
| $C_{org}$ in Säure (ppm) | 1130 | 950 | 720 |

## Beispiel 5

Die gleiche Säure wie in Beispiel 4 wurde in einem PTFE-ausgekleideten Autoklaven ca. 20 min auf 300 °C erhitzt. Nach dem Abkühlen auf 80 °C wurden gleiche Teile dieser Säure mit 0,5, 1,0 bzw. 2,0 % Aktivkohle behandelt und nach Filtration auf dem $C_{org}$-Gehalt hin untersucht.

4

0 131 876

| Menge A-Kohle bez. auf $P_2O_5$ (%) | 0,5 | 1,0 | 2,0 |
|---|---|---|---|
| $C_{org}$ in Säure (ppm) | 150 | 105 | 78 |

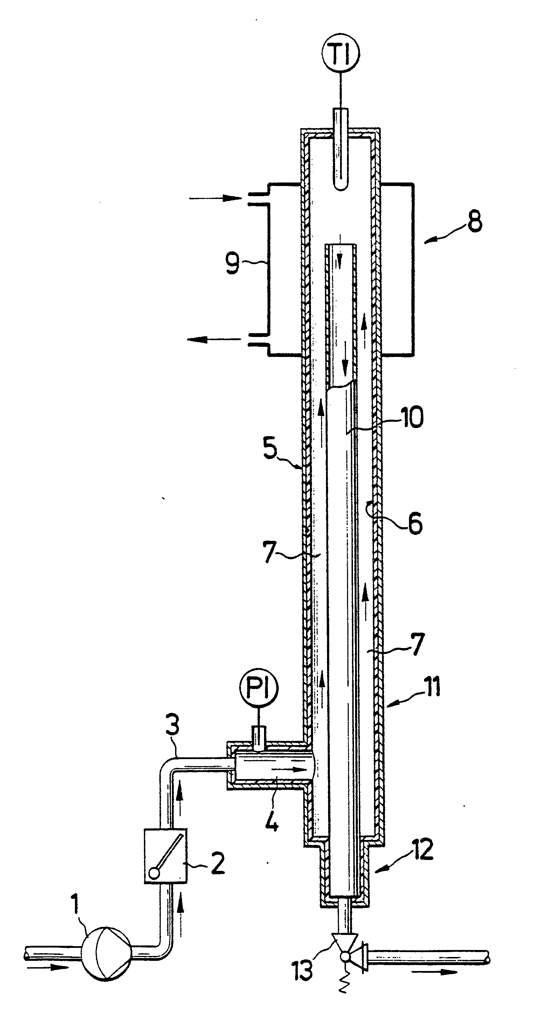

**Patentansprüche**

1. Verfahren zur Entfernung organischer Verbindungen aus roher Naßverfahrensphosphorsäure mit Hilfe eines Adsorptionsmittels, dadurch gekennzeichnet, daß man die Säure vor der Behandlung mit dem Adsorptionsmittel auf Temperaturen von mindestens 250 °C bei einem Druck von 15-85 bar erhitzt.

2. Verfahren nach Anspruch 1, dadurch gekennzeichnet, daß man die Säure auf mindestens 300 °C bei einem Druck von 30-85 bar erhitzt.

3. Verfahren nach Anspruch 1 oder 2, dadurch gekennzeichnet, daß man die Säure 0,1 bis 0,5 Stunden lang erhitzt.

4. Verfahren nach einem der Ansprüche 1 bis 3, dadurch gekennzeichnet, daß man die erhitzt Säure vor der Behandlung mit dem Adsorptionsmittel auf 60 bis 100 °C abkühlen läßt.

5. Vorrichtung zur Durchführung des Verfahrens nach Anspruch 1, gekennzeichnet durch einen geschlossenen zylindrischen Reaktor (5), der im Bereich seines einen Endes mit einer über eine Leitung (3) mit einem Förderorgan (1) für rohe Naßverfahrensphosphorsäure verbundenen Zuführung (4), im Bereich des anderen Endes mit einer Heizung (9) sowie in seinem Inneren mit einem im Durchmesser geringeren Rohr (10) versehen ist, welches in dem Bereich des Reaktors (5), in welchem die Heizung (9) angebracht ist, offen endet und das mit seinem anderen Ende hinter der Phosphorsäurezuführung (4) aus dem Reaktor (5) herausragt, wo es mit einem Druckhalteventil (13) verschlossen ist und gleichzeitig als Abflußleitung für die Phosphorsäure dient.

6. Vorrichtung nach Anspruch 5, dadurch gekennzeichnet, daß zwischen der Zuführung (4) und dem Förderorgan (1) für die rohe Naßverfahrensphosphorsäure eine Druckhalteeinrichtung (2) in die Leitung (3) eingebaut ist.

7. Vorrichtung nach Anspruch 5 oder 6, dadurch gekennzeichnet, daß in die Zuführung (4) ein Druckanzeigegerät eingebaut ist.

8. Vorrichtung nach einem der Ansprüche 5 bis 7, dadurch gekennzeichnet, daß an dem Ende des Reaktors (5), an welchem sich die Heizung (9) befindet, ein Temperaturanzeigegerät eingebaut ist.

9. Vorrichtung nach einem der Ansprüche 5 bis 8, dadurch gekennzeichnet, daß der zylindrische Reaktor (5) aus einem metallischen Werkstoff besteht und auf der produktberührten Seite mit einer Auskleidung (6) aus Graphit oder Silber oder Siliciumkarbid oder Polytetrafluorethylen versehen ist.

10. Vorrichtung nach einem der Ansprüche 5 bis 9, dadurch gekennzeichnet, daß das im Reaktor (5) zentrisch angebrachte Rohr (10) aus Graphit oder Silber oder Siliciumkarbid oder Polytetrafluorethylen besteht.

**Claims**

1. A process for removing organic compounds from crude wet-process phosphoric acid by means of an adsorbent, which comprises heating the acid, before the treatment with the absorbent, to temperatures of at least 250 °C under a pressure of 15-85 bar.

2. The process as claimed in claim 1, wherein the acid is heated to at least 300 °C under a pressure of 30-85 bar.

3. The process as claimed in claim 1 or 2, wherein the acid is heated for 0.1 to 0.5 hour.

4. The process as claimed in any of claims 1 to 3, wherein the heated acid is allowed to cool to 60-100 °C before the treatment with the adsorbent.

5. Equipment for carrying out the process as claimed in claim 1, which comprises a closed cylindrical reactor (5) which is provided, in the region of one of its ends, with a feeder (4) connected via a line (3) to a delivery device (1) for crude wet-process phosphoric acid and, in the region of the other end, is provided with a heater (9) and, in its interior, with a pipe (10) of smaller diameter which has an open end in the region of the reactor (5) where the heater (9) is fitted and the other end of which protrudes from the reactor (5) downstream of the phosphoric acid feeder (4), where the pipe is closed by a pressure-retaining valve (13) and serves at the same time as a discharge line for the phosphoric acid.

6. Equipment as claimed in claim 5, wherein a pressure retaining device (2) is built into the line (3) between the feeder (4) and the delivery device (1) for the crude wet-process phosphoric acid.

7. Equipment as claimed in claim 5 or 6, wherein a pressure indicator instrument is built into the feeder (4).

8. Equipment as claimed in any of claims 5 to 7, wherein a temperature indicator instrument is built

5

into the end of the reactor (5) where the heater (9) is located.

9. Equipment as claimed in any of claims 5 to 8, wherein the cylindrical reactor (5) is composed of a metallic material and, on the side in contact with the product, is provided with a lining (6) of graphite or silver or silicon carbide or polytetrafluoroethylene.

10. Equipment as claimed in any of claims 5 to 9, wherein the pipe (10), fitted centrally in the reactor (5), is composed of graphite or silver or silicon carbide or polytetrafluoroethylene.

**Revendications**

1. Procédé pour éliminer les impuretés organiques de l'acide phosphorique brut du procédé par voie humide à l'acide d'un agent adsorbant, caractérisé en ce que l'on chauffe l'acide, avant le traitement par l'agent adsorbant, à des températures d'au moins 250 °C sous une pression de 15 à 85 bar.

2. Procédé selon la revendication 1, caractérisé en ce que l'on chauffe l'aide à au moins 300 °C sous une pression de 30 à 85 bar.

3. Procédé selon la revendication 1 ou 2, caractérisé en ce que l'on chauffe l'acide pendant 0,1 à 0,5 h.

4. Procédé selon l'une des revendications 1 à 3, caractérisé en ce que l'acide qui a été chauffé est refroidi à une température de 60 à 100 °C avant le traitement par l'agent adsorbant.

5. Appareillage pour la mise en œuvre du procédé selon la revendication 1, caractérisé par un réacteur cylindrique fermé (5) qui, dans la région de l'une de ses extrémités, porte un conduit d'alimentation (4) relié par un conduit (3) à un organe transporteur (1) pour l'acide phosphorique brut du procédé par voie humide et est équipé dans la région de l'autre extrémité d'un chauffage (9) et, à l'intérieur, d'un tube de plus petit diamètre (10) qui, dans la région du réacteur (5) dans laquelle se trouve le chauffage (9), débouche ouvert et qui, par son autre extrémité, dépasse du réacteur (5) derrière le conduit d'alimentation (4) en acide phosphorique, est fermé à cet endroit par une soupape (13) maintenant la pression et sert simultanément de conduit d'évacuation de l'acide phosphorique.

6. Appareillage selon la revendication 5, caractérisé en ce que, entre le conduit d'alimentation (4) et l'organe transporteur (1) pour l'acide phosphorique brut du procédé par voie humide, on a inséré dans le conduit (3) un dispositif maintenant la pression (2).

7. Appareillage selon la revendication 5 ou 6, caractérisé en ce que l'on a inséré dans le conduit d'alimentation (4) un dispositif indicateur de pression.

8. Appareillage selon l'une des revendications 5 à 7, caractérisé en ce que, à l'extrémité du réacteur (5) où se trouve le chauffage (9), on a inséré un dispositif indicateur de température.

9. Appareillage selon l'une des revendications 5 à 8, caractérisé en ce que le réacteur cylindrique (5) consiste en un matériau métallique qui, sur sa face en contact avec les produits, porte un revêtement (6) de graphite ou d'argent ou de carbure de silicium ou de polytétrafluoréthylène.

10. Appareillage selon l'une des revendications 5 à 9, caractérisé en ce que le tube (10) en disposition centrale dans le réacteur (5) consiste en graphite ou argent ou carbure de silicium ou polytétrafluoréthylène.